# EUROPEAN PATENT SPECIFICATION

(11) **EP 0 395 129 B1**
(45) Date of publication and mention of the grant of the patent: **11.10.1995**
(21) Application number: 90200754.1
(22) Date of filing: 29.03.1990
(51) Int. Cl.: A01K 63/06

(54) **Aquarium having an auxiliary framework**
Aquarium mit einem Hilfsgestell
Aquarium avec une charpente auxiliaire

(30) Priority: 10.04.1989 ES 8901113; 03.05.1989 ES 8901414
(43) Date of publication of application: 31.10.1990
(73) Proprietor: OCCORIS, S.A., 08440 Cardedeu (Barcelona) (ES)
(72) Inventor: Puig-Sureda Font, José, ES-08480 L'Ametlla Del Valles(Barcelona) (ES)
(74) Representative: Ungria Lopez, Javier

(56) References cited:
- CH-A- 558 135
- DE-U- 8 912 939
- US-A- 3 821 514
- US-A- 3 841 267
- US-A- 4 839 498

## Description

The present invention refers to an aquarium having an auxiliary framework for allowing placement of elements necessary for a correct operation of the aquarium and the adequate preservation of the water for the fish. These elements may remain hidden behind the framework enveloping the top edges of the aquarium. All elements and the components of the framework itsself are removable.

Conventional aquariums are normally prismatic vessels and comprise accessories or auxiliary elements that are generally mounted in correspondence with the top or rear part of the aquarium. These elements are usually totally visible thereby causing a rather unaesthetical appearance.

Besides, in conventional aquariums there are many of these auxiliary elements or components which are not removable so that storage, transport etc. thereof involves problems and inconveniences which lead to high costs.

A framework for prismatic aquariums is disclosed in US-A-3,841,267. The framework comprises sections enveloping the upper edges of the aquarium and a broad central cover plate bearing a housing for an illuminating device as well as movable closing lids. The insides of the sections have horizontally protruding support ledges on which the support plate rests. This framework has a number of disadvantages consisting in only limited accessibility to the aquarium's inside when manipulations are necessary, the impossibility of arranging other elements usually employed in aquariums to the framework, and a rather complex and thus expensive structure.

Another framework for aquariums is disclosed in DE-U-8912939. This framework comprises enveloping profiles of the aforementioned type, and an illuminating device which loosely rests on support projections of the insides of oppositely arranged profiles, as well as two horizontally slidable cover plates. Again, the disadvantages of this assembly are those mentioned in connection with US-A-3,841,267 and, moreover, that the loose arrangement of the illumination device is even dangerous.

The instant invention as claimed is intended to remedy the aforementioned drawbacks of prior art aquariums in a simple and unexpensive manner.

One way of carrying out the invention is described hereinbelow with reference to the drawings which only illustrate one specific embodiment, in which
- Fig. 1: is a general top perspective view of the aquarium;
- Fig. 2: is a side elevational view with a sectioned portion of the aquarium of fig. 1 showing the basic structure of the invention with the profiles mounted on the top edges of the aquarium;
- Fig. 3: is a transversal sectional view according to a side elevational view of the invention as represented in figs. 1 and 2, and wherein one can see the corresponding auxiliary elements that will remain hidden by the outer flaps of the profiles mounted on the top edges of the aquarium, adequately located and mounted.

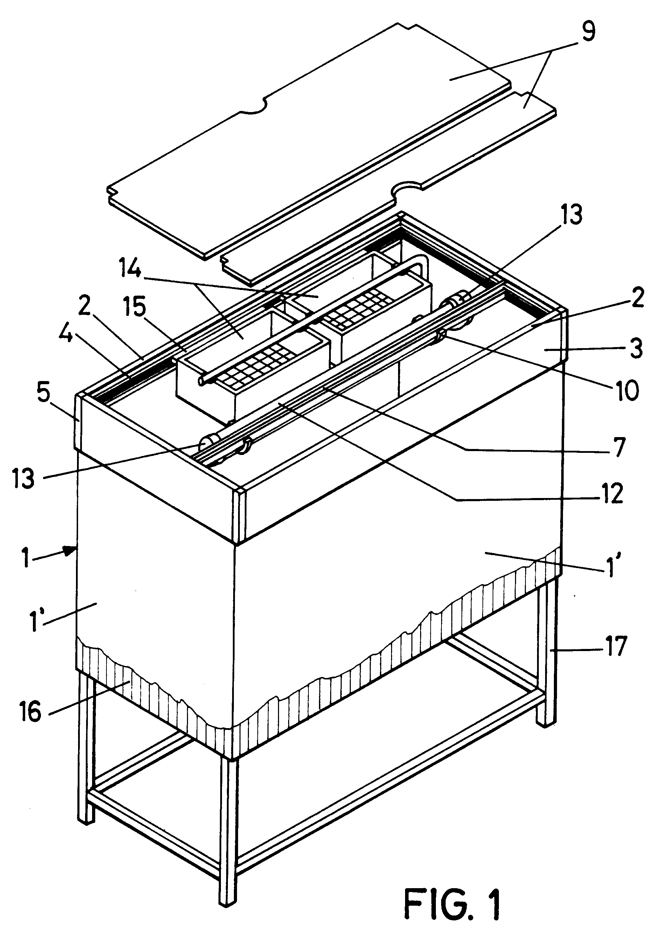

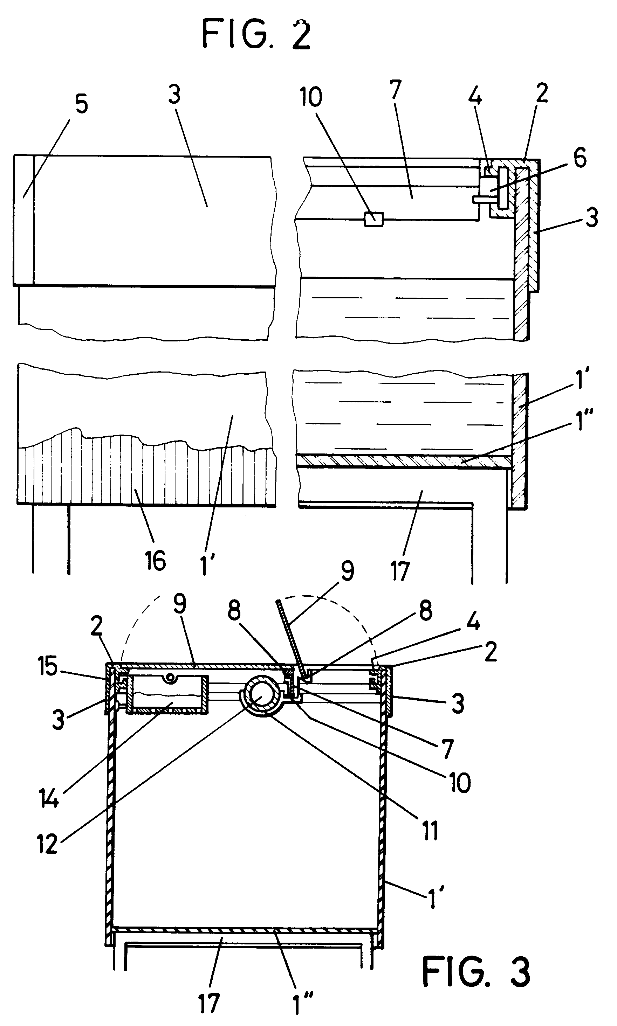

In accordance with these figures, the aquarium 1 has a general rectangular prismatic shape determined by four transparent plates 1' forming the side walls, and a horizontal bottom plate 1'', connected to each other by their respective edges with the particularity that the bottom plate 1'' is positioned inwards in relation to the side plates 1', defining a descending peripheral edge as clearly shown in figs. 2 and 3.
Profiles 2 are placed upon the top edges of the aquarium 1 enveloping the side plates 1'. The profiles 2 comprise at their outside vertical flaps 3 and inside guides 4 which are to directly or indirectly support the auxiliary elements of the aquarium 1. The guides 4 have the shape of inwardly recessed tracks.
The profiles 2 are complemented by corner pieces 5 in correspondence with the ends which form the finnishing or connecting means of contiguous ends of the flaps 3 to provide an enveloping continuity of a broad top area of the aquarium 1, as shown in fig. 1.
Projections 6 are fit in the guides 4 for coupling a cross member 7 materialized by a profile with two opposite side fins 8 which comprise the seat and the center of articulation for a pair of sheets 9 forming the top cover of the aquarium and fit in between said cross member 7 and the profiles 2.
One of the fins 8 of the cross member 7 is concave at its top portion, defining the center of articulation for the corresponding sheet 9, such that it is capable of retaining and holding said sheet 9 in the open position as shown in fig. 3 in which one of the sheets remains immobile whilst the other referred to as 9 can be opened as if it were articulated, to permit access to the inside of the aquarium 1.
On the cross member 7 there are supports 10 provided with an arched side arm 11 which receives the seat of a tube-shaped body 12. The ends of the latter have covers 13 which seal or close it to constitute a watertight container for a conventional fluorescent tube or similar lighting element.
The guides 4 may receive trays 14 for the water-filtering mass, the trays 14 having a descending continuous or discontinuous flange 15 situated at the top portion of the tray 14 to form a support hook in relation to one of the edges of the guide 4, the side portion of the tray resting against the inner surface of the respective plate 1'.
The outer flaps 3 of the profiles 2 have a height larger than or equal to that of the trays 14 for the filtering mass, and larger or equal to the height of the cross member 7 with the supports 10 and the tube shaped body 12 which contains the illuminating means, such that all auxiliary elements are hidden behind the frame established by the profiles 2, or what amounts to the same thing, by the perimetric flaps 3.
As readily apparent from the previous description, the profiles 2 and the rest of the auxiliary elements can be removed from the aquarium 1 and can be mounted by the user himself.
The bottom 1'' which remains in an inward position with regard to the bottom edges of the die plates 1', constitutes an auxiliary surface 16 which can be decorated. The peripheral edges also determine a means for centering the aquarium in relation to a support table 17 as shown in the figures.

## Claims

1. Aquarium (1) being a prismatic vessel with a framework for positioning and securing illuminating, auxiliary, conditioning and/or control devices, the framework comprising profiles (2) enveloping the top edges of the aquarium's walls (1') and having outer vertical flap portions (3) and inner vertical flap portions (4) having horizontal guide means (4) to support said devices, and positioning corner pieces (5), characterized in that
- said guide means (4) is an inwardly recessed horizontal track;
- said devices have projecting portions (6,15) being substantially complementary to the shape of said guide means (4) and are slidably secured within said guide means (4) by said portions (6,15); and
- said corner pieces (5) are removable to allow independent disassembly of each profile (2).

2. Aquarium according to claim 1, characterized in that said auxiliary device is a cross member (7) comprising two end portions (6) by which said cross member (7) is secured within said guide means (4) and two opposed lateral fins (8) defining a seat and an articulation for sheets (9) covering the whole top opening of the aquarium (1) and being supported on the top portions of said profiles (2) and said fins (8).

3. Aquarium according to claim 2, characterized in that at least one of said fins (8) has a concave shaped in the topside to retain and support at least one of said sheets (9) in an open position.

4. Aquarium according to any of claims 2 or 3, characterized in that said cross member (7) is coupled to at least one support (10) bearing an arched side arm (11) supporting a tube-shaped body (12) the ends of which are covered by closures (13) and which houses a conventional tubular illuminating means (18).

5. Aquarium according to claim 1, characterized in that said auxiliary means is a filtering tray (14) bearing said complementary porjection (15) at the upper portion of its rear sidewall, said projection (15) being a hook-shpaed flange (15) by which said tray is secured within said guide means (4).

6. Aquarium according to any of claims 2 - 5, characterized in that the height of the outer flap portions (3) is larger than or equal to the height of said tray (14), of said cross member (7), of said supports, and of said tube-shaped body.

## Patentansprüche

1. Aquarium (1) in Form eines prismatischen Behälters mit einem Rahmen zum Anordnen und Befestigen von Beleuchtungs-, Hilfs-, Konditionierungs- und/oder Steuervorrichtungen, wobei der Rahmen Profile (2) aufweist, die die oberen Kanten der Aquarium-Wände (1') umfassen und äußere, vertikale Leistenabschnitte (3) haben sowie innere, vertikale Leistenteile, die ihrerseits zum Abstützen der genannten Vorrichtungen horizontale Führungsvorrichtungen (4) aufweisen sowie ausrichtende Eckstücke (5),
dadurch **gekennzeichnet,** daß
- die Führungsvorrichtung (4) eine innen vertiefte, horizontale Schiene ist,
- daß die genannten Vorrichtungen vorspringende Teile (6, 15) haben, die zur Form der Führungsvorrichtung (4) im wesentlichen komplementär sind und die innerhalb der Führungsvorrichtung (4) mit Hilfe der genannten Teile (6, 15) verschiebbar befestigt sind, und
- daß die Eckstücke (5) abnehmbar sind, um eine unabhängige Demontage jedes Profils (2) zu ermöglichen.

2. Aquarium nach Anspruch 1, dadurch gekennzeichnet, daß die Hilfs-Vorrichtung ein quer verlaufendes Teil (7) ist, das zwei Endabschnitte (6) aufweist, mit deren Hilfe das quer verlaufende Teil (7) an den Führungsvorrichtungen (4) befestigt ist sowie zwei einander gegenüberliegende, seitliche Rippen (8), die einen Sitz und einen Gelenkpunkt für Bleche (9) bilden, die ihrerseits die gesamte, obere Öffnung des Aquariums (1) abdecken und die auf den oberen Teile der Profile (2) und auf den Rippen (8) abgestützt werden.

3. Aquarium nach Anspruch 2, dadurch gekennzeichnet, daß wenigstens eine der genannten Rippen (8) an der Oberseite eine konkave Form hat, um wenigstens eines der Bleche (9) in einer offenen Stellung zu halten und abzustützen.

4. Aquarium nach einem der Ansprüche 2 oder 3, dadurch gekennzeichnet, daß das quer verlaufende Teil (7) mit wenigstens einem Halteteil (10) verbunden ist, das seinerseits einen gekrümmten Seitenarm (11) trägt, der einen rohrförmigen Körper (12) abstützt, dessen Enden mit Hilfe von Andeckungen (13) abgedeckt sind und der eine übliche, rohrförmige Beleuchtungsvorrichtung aufnimmt.

5. Aquarium nach Anspruch 1, dadurch gekennzeichnet, daß die Hilfs-Vorrichtung eine Filterschale (14) ist, die am oberen Teil ihrer hinteren Seitenwand den genannten, komplementären Vorsprung (15) aufweist, der seinerseits als hakenförmiger Flansch (15) ausgebildet ist, mit dessen Hilfe die Schale innerhalb der Führungsvorrichtung (4) befestigt ist.

6. Aquarium nach einem der Ansprüche 2 bis 5, dadurch gekennzeichnet, daß die Höhe der äußeren Leistenteile (3) größer oder gleich ist wie die Höhe der Schale (14), des quer verlaufenden Teiles (7), der Halteteile und des rohrförmigen Körpers.

## Revendications

1. Aquarium (1) constitué d'un récipient prismatique comportant un bâti pour le positionnement et la fixation de dispositifs d'illumination, auxiliaires, de conditionnement et/ou de contrôle, ce bâti comportant des éléments profilés (2) enveloppant les bords supérieurs des parois (1') de l'aquarium et ayant des brides verticales externes (3) et des brides verticales internes pourvues de moyens de guidage horizontaux (4) destinés à supporter ces dispositifs, et des pièces d'angle de positionnement (5), caractérisé en ce que
- lesdits moyens de guidage (4) sont constitués par un épaulement horizontal formant chemin de guidage;
- lesdits dispositifs ont des parties en saillie (6,15) qui sont pratiquement complémentaires de la forme desdits moyens de guidage (4) et sont montés à glissement à l'intérieur desdits moyens de guidage (4) par l'intermédiaire desdites parties (6,15); et
- lesdites pièces d'angle (5) sont amovibles afin de permettre le démontage indépendant de chaque profilé (2).

2. Aquarium selon la revendication 1, caractérisé en ce que ledit dispositif auxiliaire est une entretoise (7) comportant deux parties d'extrémité (6) grâce auquelles ladite entretoise (7) est montée à l'intérieur desdits moyens de guidage (4), et deux ailes latérales opposées (8) définissant un siège et une articulation pour des plaques (9) recouvrant la totalité de l'ouverture supérieure de l'aquarium (1) et qui sont supportées sur les parties supérieures desdits profilés (2) et desdites ailes (8).

3. Aquarium selon la revendication 2, caractérisé en ce qu'au moins l'une desdites ailes (8) est conformée de façon concave vers le haut afin de retenir et de supporter au moins une desdites plaques (9) en position ouverte.

4. Aquarium selon l'une quelconque des revendications 2 ou 3, caractérisé en ce que ladite entretoise (7) est couplée à au moins un support (10) portant un bras latéral cintré (11) supportant un élément en forme de tube (12) dont les extrémités sont recouvertes par des éléments de fermeture (13) et dans lequel est logé un dispositif d'éclairage tubulaire classique.

5. Aquarium selon la revendication 1, caractérisé en ce que ledit moyen auxiliaire est un plateau de filtration (14) qui comporte ladite partie en saillie complémentaire (15) au niveau de la partie supérieure de sa paroi latérale arrière, ladite partie en saillie (15) étant une bride en forme de crochet au moyen de laquelle ledit plateau est fixé à l'intérieur desdits moyens de guidage (4).

6. Aquarium selon l'une quelconque des revendications 2 à 5, caractérisé en ce que la hauteur des brides externes (3) est supérieure ou égale à la hauteur dudit plateau (14), à celle ladite entretoise (7), à celle dudit support, ou à celle de l'élément en forme de tube.
